(19) Europäisches Patentamt
European Patent Office
Office européen des brevets

(11) Veröffentlichungsnummer: **0 036 505**
**B1**

(12) # EUROPÄISCHE PATENTSCHRIFT

(45) Veröffentlichungstag der Patentschrift: **16.03.83**

(51) Int. Cl.³: **C 09 B 44/18,** D 06 P 1/08

(21) Anmeldenummer: **81101399.4**

(22) Anmeldetag: **26.02.81**

(54) **Verfahren zur Herstellung kationischer Farbstoffe sowie ihre Verwendung zum Färben von sauermodifizierten Synthesefasern.**

(30) Priorität: **11.03.80 DE 3009267**

(43) Veröffentlichungstag der Anmeldung: **30.09.81 Patentblatt 81/39**

(45) Bekanntmachung des Hinweises auf die Patenterteilung: **16.03.83 Patentblatt 83/11**

(84) Benannte Vertragsstaaten: **BE CH DE FR GB IT LI**

(56) Entgegenhaltungen:
**DE-A-2 816 350**
**FR-A-1 414 545**
**FR-A-1 443 107**
**FR-A-1 538 985**
**GB-A-2 009 212**

**Die Akte enthält technische Angaben, die nach dem Eingang der Anmeldung eingereicht wurden und die nicht in dieser Patentschrift enthalten sind.**

(73) Patentinhaber: **BAYER AG, Zentralbereich Patente, Marken und Lizenzen, D-5090 Leverkusen 1, Bayerwerk (DE)**

(72) Erfinder: **Kühlthau, Hans-Peter, Dr., *Paul-Klee-Strasse 48, D-5090 Leverkusen (DE)***

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

# Verfahren zur Herstellung kationischer Farbstoffe sowie ihre Verwendung zum Färben von sauermodifizierten Synthesefasern

Die vorliegende Erfindung betrifft ein Verfahren zur Herstellung von Farbstoffen der Formel

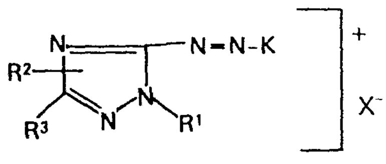

1,

worin
$R^1$ und $R^2$ evtl. substituiertes Alkyl, Alkenyl oder Aralkyl,
$R^3$ Wasserstoff, evtl. substituiertes Alkyl, Aralkyl, Cycloalkyl oder Aryl,
K den Rest einer Kupplungskomponente KH und
$X^-$ ein Anion bedeuten,
sowie deren Lösungen bzw. Suspensionen, dadurch gekennzeichnet, dass man die durch Reaktion von Aminotriazolen der Formel

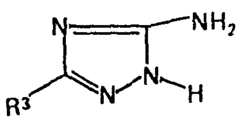

2,

salpetrige Säure bildenden Substanzen und Kupplungskomponenten HK bei einem durch Zugabe einer Säure eingestellten pH-Wert von $4 < pH < 6$ erhaltenen Suspensionen bzw. Lösungen von Farbstoffen der Formel

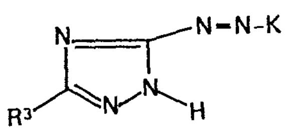

3

ohne Isolierung der Farbstoffe mit Alkylierungsmitteln bzw. Aralkylierungsmitteln, die die Reste $R^1$, $R^2$ und $X^-$ abzugeben bzw. zu bilden vermögen, und - falls sie das Anion $X^-$ nicht bilden - in Gegenwart einer das Anion $X^-$ liefernden Säure umsetzt und die Farbstoffe gegebenenfalls isoliert.

Nach Ende der Kupplung wird die Reaktionsmischung gegebenenfalls neutralisiert bzw. alkalisch gestellt und dann mit einem Alkylierungsmittel bzw. Aralkylierungsmittel umgesetzt. Während der Umsetzung hält man den pH-Wert der Mischung bei mittleren Werten, etwa bei 2-11, bevorzugt bei 6-9.

Die Erfindung betrifft ausserdem die Verwendung der so erhaltenen Farbstoffe zum Färben von sauer modifizierten Synthesefasern sowie nach dem Verfahren erhaltene Flüssigeinstellungen.

Überraschend wurde gefunden, dass die nach dem erfindungsgemässen Verfahren hergestellten Farbstoffe der Formel 1 hervorragend zum Färben von sauer modifizierten Textilien geeignet sind. Die Klarheit der dabei erzielten Farbtöne wird dabei sogar begünstigt gegenüber derjenigen von Farbstoffen der Formel 1, die auf übliche Weise aus vorher isolierten Azofarbstoffen der Formel 3 hergestellt wurden.

Geeignete Lösungsmittel sind beispielsweise: Wasser; wasserlösliche Lösungsmittel, z.B. Alkohole, wie Methanol, Ethanol, Propanol, Isopropanol, Butanol, Amylalkohole; Glykole, wie Ethylenglykol, Propylenglykol, Butylenglykol; Polyethylenglykole; Glykolether, wie Ethylglykol; Glykolester, wie Methyl- und Ethylglykolacetat; Ketone, wie Aceton, Methylethylketon; Carboxyamide, wie Formamid, Dimethylformamid, Dimethylacetamid, Tetramethylharnstoff; Sulfolane, wie Tetrahydrothiophendioxid; Nitrile, wie Acetonitril, Ethylencyanhydrin; Ether, wie Dioxan, Tetrahydrofuran; Dimethylsulfoxid; N-Methylpyrrolidon; Hexamethylphosphortriamid; oder wasserunlösliche Lösungsmittel, z.B. Nitrobenzol, und deren Gemische. Auch Zusätze von Emulgatoren bzw. Dispergiermitteln sind vorteilhaft.

Geeignete Alkylierungsmittel bzw. Aralkylierungsmittel sind z.B.: Ester, wie Dimethylsulfat, Diethylsulfat, Benzolsulfonsäuremethylester, p-Toluolsulfonsäuremethylester; Halogenverbindungen, wie Butylbromid, Benzylbromid, Benzylchlorid; Epoxide, wie Ethylenoxid, Propylenoxid, Epichlorhydrin, Butylenoxid, Ethyloxypropylenoxid in Gegenwart von Säuren.

Die am häufigsten angewendete salpetrige Säure liefernde Substanz ist Natriumnitrit.

Geeignet sind anorganische und organische Säuren, vor allem niedere Fettsäuren, wie z.B. Ameisensäure, Propionsäure und besonders bevorzugt Essigsäure.

Vorzugsweise wird die Kupplung bei -10 bis +55°C und die Alkylierung bzw. Quaternierung bei 0 bis 90°C durchgeführt.

Im allgemeinen werden die Reaktionen des neuen Verfahrens in der ersten Phase unter Kühlung begonnen, dann wird bei Raumtemperatur ausgekuppelt, und danach werden die Reaktionen des Verfahrens durch Alkylieren bzw. Aralkylieren unter erneutem Kühlen, bei Raumtemperatur oder unter Erwärmen abgeschlossen.

Man kann so vorgehen, dass man das neue Verfahren durch gleichzeitige Diazotierung eines Aminotriazols 2 und Kupplung auf eine Kupplungskomponente KH bei -10 bis +5°C, beispielsweise bei -5°C, beginnt und die Kupplung durch langsames Erwärmen auf 15 bis 55°C, beispielsweise auf 20°C, zu Ende führt, dann die Mischung neutralisiert, wieder auf 0 bis 20°C, beispielsweise auf 10°C, abkühlt und unter Beibehaltung eines pH-Wertes von 6-10 durch Zugabe einer Base, wie z.B. MgO oder $NaHCO_3$, Dimethylsulfat eindosiert, wobei man die Temperatur wieder langsam auf 15 bis 30°C, beispielsweise auf 20°C, ansteigen lässt.

Andere Quaternierungsmittel fordern teilweise höhere Reaktionstemperaturen, beispielsweise bis 90°C. Auch andere Alkali- bzw. Erdalkalioxide, -hydroxide und -carbonate oder auch tert. Amine, wie z.B. Tris-(hydroxypropyl)-amin, sind zur Einhaltung eines günstigen pH-Wertes geeignet. Die Quaternierung mit Epoxiden erfolgt im sauren pH-Bereich. Die Zugabe der Reagentien ist an keine bestimmte Reihenfolge gebunden. Man kann z.B. Aminotriazole und $NaNO_2$ in Wasser vorlegen, wobei man das Reaktionsvolumen erheblich verkleinern kann, wenn man einen Teil des Wassers durch ein anderes Lösungsmittel ersetzt, dann ein Gemisch einer Kupplungskomponente mit so viel Eisessig eintropfen, dass ein pH-Wert unter 6, jedoch über 4, eingestellt wird, und nach Beendigung der Kupplung ein Alkylierungsmittel eintropfen. Ebenso kann man z.B. in einem Lösungsmittel nahezu äquivalente Mengen Eisessig, Aminotriazol und einer Kupplungskomponente vorlegen und dazu wässrige Natriumnitritlösung tropfen. Als zweckmässig hat sich bei diesem Verfahren erwiesen, anschliessend noch so viel Eisessig einzutropfen, dass ein pH-Wert von ca. 5 eingestellt wird. Da mit fortschreitender Reaktion die meist flüssige Kupplungskomponente einem Feststoff, dem Azofarbstoff 3, Platz macht, das Reaktionsmedium also steifer wird, wird zweckmässigerweise so viel Wasser eindosiert, dass eine gute Rührbarkeit erhalten bleibt. Da bei der anschliessenden Umsetzung mit einem Alkylierungsmittel wieder Lösung eintritt bzw. ein Farbstofföl entsteht, muss anschliessend nicht mehr verdünnt werden.

In den Formeln sind unter Alkylresten insbesondere $C_1$- bis $C_4$-Alkylreste zu verstehen. Die Alkylreste können nichtionische Substituenten tragen. Als solche sind beispielsweise Halogen, Hydroxy, Cyan $C_1$- bis $C_4$-Alkoxy, $C_1$- bis $C_4$-Alkoxycarbonyl, $C_1$- bis $C_3$-Alkylcarbonyloxy, Aminocarbonyl, Phenoxy, Benzyloxy, Benzoyloxy, Mono- und Di-($C_1$- bis $C_2$-alkyl)-amino, Mono- und Di-($C_1$- bis $C_2$-alkyl)-aminocarbonyl, Phenoxyalkyloxy, Phenoxycarbonyloxy oder Phenylaminocarbonyloxy zu verstehen.

Unter Halogen ist vorzugsweise Fluor, Chlor oder Brom zu verstehen.

Geeignete Arylreste sind insbesondere ein gegebenenfalls substituierter Phenyl- oder Naphthylrest.

Geeignete Aralkylreste sind insbesondere ein gegebenenfalls substituierter Benzyl-, α- oder β-Phenylethyl-, α-, β- oder γ-Phenylpropylrest.

Unter Cycloalkyl wird vorzugsweise Cyclohexyl verstanden.

Geeignete Substituenten dieser Isocyclen sind die obengenannten Substituenten der Alkylreste und ausserdem $C_1$- bis $C_4$-Alkyl.

Geeignete Aminotriazole der allgemeinen Formel 2 sind z.B.: 3-Amino-1,2,4-triazol, 3-Amino-5-naphthyl-1,2,4-triazol, 3-Amino-5-ethyl-1,2,4-triazol, 3-Amino-5-phenyl-1,2,4-triazol, 3-Amino-5-cyclohexyl-1,2,4-triazol, 3-Amino-5-phenoxymethyl-1,2,4-triazol, 3-Amino-5-benzyl-1,2,4-triazol.

Kupplungskomponenten KH sind insbesondere die der Benzol-, Indol-, Indolin- und Tetrahydrochinolinreihe, beispielsweise die Verbindungen der Formel

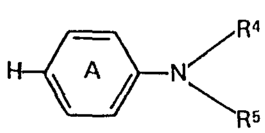 4 und 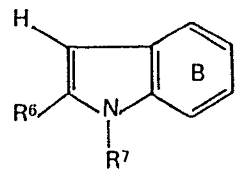 5,

worin

$R^4$ für H, eine gesättigte oder ungesättigte $C_1$- bis $C_8$-Alkylgruppe, die durch $R^8$ substituiert sein kann,

$R^5$ für Phenyl oder eine gesättigte oder ungesättigte $C_1$- bis $C_8$-Alkylgruppe, die durch $R^8$ substituiert sein kann,

$R^8$ für Halogen, Hydroxy, $C_1$- bis $C_4$-Alkoxy, Cyan, Acetoxy, Di-($C_1$- bis $C_3$-alkyl)-amino, $C_1$- bis $C_2$-Alkoxycarbonyloxy, $C_1$- bis $C_4$-Alkoxycarbonyl, Aminocarbonyl, Mono- und Di-($C_1$- bis $C_2$-alkyl)-aminocarbonyl, Cyclohexyl, Cyclohexyloxy, Phenyl, Naphthyl, Phenoxy, Naphthoxy, Benzoyloxy, Phenoxyalkyloxy, Phenoxycarbonyloxy, Phenylaminocarbonyloxy, Benzoyl oder Thiophenyl stehen und

die aromatischen Ringe in $R^4$, $R^5$ und $R^8$ ihrerseits Substituenten, wie Chlor, Methyl, Ethyl, Methoxy, Ethoxy, Phenyl oder Cyclohexyl, tragen können,

$R^4$ und $R^5$ zusammen mit dem N-Atom einen Ring, beispielsweise zum Pyrrolidin, Piperidin, Piperazin oder Morpholin, schliessen können,

$R^4$ und $R^5$ zum Ring A ringgeschlossen sein können, so dass z.B. ein gegebenenfalls durch Methyl, Ethyl, Chlor oder Methoxy substituiertes Indolin, Tetrahydrochinolin-, Benzomorpholin- oder Carbazolringsystem entsteht,

die Ringe A und B beispielsweise durch $C_1$- bis $C_4$-Alkyl, Halogen, $C_1$- bis $C_3$-Alkoxy, Acetylamino, Trifluormethyl, $C_1$- bis $C_2$-Alkylsulfonyl oder Cyan substituiert sein können, zwei benachbarte Substituenten des Ringes A miteinander ringgeschlossen sein können, so dass zusammen mit dem Ring A ein Tetrahydronaphthalin-, ein Naphthalin- oder ein heterocyclisches Ringsystem entsteht,

$R^6$ Methyl, Ethyl oder Phenyl und

$R^7$ H, Benzyl oder Alkyl, welches beispielsweise durch $R^8$ substituiert sein kann, bedeuten.

Geeignete Verbindungen der Formeln 4 und 5 sind beispielsweise:

Dimethylanilin, N,N-Dimethyl-m-anisidin,
N,N-Diethyl-m-ansidin, Diethylanilin,
N,N-Diethyl-3-chlor-anilin,
N,N-Diethyl-2-chloranilin,
Diisopropylanilin, N,N-Diethyl-o-anisidin,
N,N-Dibutyl-2-chlor-anilin,
Dibutylanilin, N,N-Diethyl-3-fluor-anilin,
N,N-Diethyl-2-trifluormethyl-anilin,
N-Ethyl-N-cyanethyl-anilin,

N-Butyl-N,β-chlorethyl-anilin,
N-Methyl-N-ethyl-2-chlor-anilin,
N-Butyl-N,β-hydroxyethyl-anilin,
N-Ethyl-N,β-hydroxypropyl-anilin,
N-Methyl-diphenylamin,
N-Ethyl-N,2-methoxycarbonyloxyethyl-anilin,
N-Ethyl-N-(2-acetoxyethyl)-anilin,
N-Methyl-N,β-cyanethyl-anilin,
N,N-Bis-(2-cyanethyl)-anilin,
N-Ethyl-N-(2-dimethylaminoethyl)-anilin,
N,N-Dimethyl-3-chlor-anilin,
2-Dimethylamino-toluol, 3-Dimethylamino-toluol, 3-Diethylamino-toluol,
3-[N-Ethyl-N-(2-chlorethyl)-amino]-toluol,
N-Ethyl-N-(2-hydroxyethyl)-3-methyl-anilin,
N,N-Bis-(2-cyanethyl)-3-methyl-anilin,
N-Methyl-N-benzyl-anilin,
N-Methyl-N-benzyl-2-chlor-anilin,
N-Ethyl-N-benzyl-anilin,
N-Methyl-N-benzyl-o-anisidin,
N-Ethyl-N-benzyl-m-toluidin,
1-Dimethylamino-naphthalin,
1-Diethylamino-naphthalin,
3-Diethylamino-acetanilid,
3-Diethylamino-1-ethoxy-benzol,
N,N-Bis-(2-acetoxyethyl)-2-ethoxy-5-acetylamino-anilin,
3-Dimethylamino-4-methyl-anisol,
N-Ethyl-N,β-phenylaminocarbonyloxyethyl-anilin,
N-Ethyl-N,β-(3-chlor-phenylaminocarbonyloxyethyl)-anilin,
N-Ethyl-N,β-(4-chlor-phenylaminocarbonyloxyethyl)-anilin,
N-Ethyl-N,β-(4-methyl-3-chlor-phenylaminocarbonyloxyethyl)-anilin,
N-Ethyl-N,β-benzoyloxyethyl-anilin,
N-Ethyl-N,β-phenoxyethyl-anilin,
N-Ethyl-N,β-benzyloxyethyl-anilin,
N-Ethyl-N,β-cyclohexyloxyethyl-anilin,
N-Ethyl-N,β-naphthoxyethyl-anilin,
N-Ethyl-N,β-benzoylethyl-anilin,
N-Ethyl-N,β-phenoxycarbonyloxyethyl-anilin,
N-Ethyl-N,β-(2,5-dichlorbenzoyloxyethyl)-anilin,
N-Ethyl-N,β-(p-phenyl-phenoxyethyl)-anilin,
N-Ethyl-N,β-benzoyloxyethyl-3-chlor-anilin,
N-Ethyl-N,β-benzoyloxyethyl-m-anisidin,
N,N-Dibutyl-m-anisidin, N,N-Dibutyl-m-chlor-anilin,
N-Ethyl-N-benzyl-m-chlor-anilin,
N-Methyl-N-benzyl-m-anisidin,
N-Methyl-N-benzyl-m-chlor-anilin,
Phenylmorpholin, N-Phenyl-piperidin,
N-Methyl-2,2,3-trimethyl-tetrahydrochinolin,
Dibenzylanilin, N,N-Diethyl-2-ethyl-anilin,
N-Ethyl-N-benzyl-m-anisidin.

Weitere gut geeignete Kupplungskomponenten KH werden z.B. in US-Patentschrift 4051117 in den Spalten 11 bis 18 sowie in den Spalten 21, 23, 25, 27, 29 und 31, in US-Patentschrift 4039539 in den Spalten 9–15 und in den deutschen Offenlegungsschriften 2255060, Seiten 15–16, 2255059, Seiten 15–16 und 2255058, Seiten 15–17, genannt.

Nach dem neuen Verfahren werden – je nach Lösungsmittel und Löslichkeit der hergestellten Farbstoffe der Formel 1 – Farbstofflösungen oder -suspensionen erhalten. Die nach der Quaternierung erhaltenen Lösungen der Farbstoffe der Formel 1, die gut mit Wasser mischbar sind, sind überraschend direkt als Farbstoffpräparate zum Färben sauer modifizierter Textilien in klaren Farbtönen geeignet. Sind die Farbstoffe der Formel 1 in dem Reaktionsgemisch nicht so gut löslich, erhält man meist suspendierte Öle, die man gegebenenfalls durch Einrühren von Salzen, wozu z.B. Natrium- oder Ammoniumsulfat oder deren Lösungen gut geeignet sind, vollständig aussalzt, die Salzlösung abscheidet und die gut lösliche Ölphase durch Einrühren von Wasser oder einem anderen Lösungsmittel (gut geeignet sind Glykole) auf die Farbstücke eines flüssigen handelsüblichen Färbepräparates verdünnt. Auch diese derart im Eintopfverfahren hergestellten homogenen Flüssigeinstellungen sind überraschenderweise hervorragend zur Erzeugung klarer Farbtöne auf synthetische Fasermaterialien geeignet.

Zur Abscheidung kristalliner Farbsalze aus den erfindungsgemäss erhaltenen Reaktionsmischungen ist z.B. die Zugabe von Alkalichloriden, gegebenenfalls zugleich mit Zinkchlorid, Bromiden, Tetrafluorboraten oder Arylsulfonaten geeignet. Auch die Einführung anderer, beispielsweise in der DE-AS 2255058, Spalte 4–6 aufgeführter Anionen $X^-$ ist nach bekannten Arbeitsweisen möglich.

Nach einer besonders geeigneten Arbeitsweise lassen sich die Farbstoffe der Formel 1 in Pulverform isolieren, indem man die von der Salzlösung abgetrennten Farbstofföle mit Wasser verrührt und dann bei erhöhter Temperatur, z.B. bei 80–100°C, ein Salz des Anions zugibt, mit dem der Farbstoff der Formel 1 gut auskristallisiert, den Rührer stillsetzt und das heisse Farbstofföl, das sich sofort unten abscheidet, auf ein Trockenblech laufen lässt. Dazu geeignet ist z.B. die Zugabe von Alkali- oder Ammoniumchlorid und $ZnCl_2$. Derart isolierte Öle sind überraschenderweise sehr wasserarm und erstarren bei erhöhter Temperatur, z.B. zwischen 45 und 80°C, im Vakuum sehr schnell zu einem leicht mahlbaren Produkt.

Bei der Durchführung des neuen Verfahrens ist bei der Wahl des Lösungsmittels neben der Löslichkeit der als Zwischenstufe entstehenden Azoprodukte der Formel 3 zunächst die Viskosität flüssiger Kupplungskomponenten KH bei tiefer Temperatur zu beachten. So sind Aniline mit kleinen Substituenten an der Aminogruppe, z.B. Dimethyl-, Diethyl- oder Dipropylanilin, auch bei -5°C so dünnflüssig, dass man das Verfahren in Gegenwart von Wasser als einzigem Lösungsmittel durchführen kann. Bei vielen grösseren Substituenten am Anilin ist unter 0°C die Viskosität so hoch, dass sich diese Kupplungskomponenten nicht mehr ausreichend suspendieren lassen. Dann müssen andere Lösungsmittel in dem Masse zugesetzt werden, dass eine gute Rührbarkeit erreicht wird. Auch durch einen Zusatz von Dispergiermitteln bzw. Emulgatoren kann die Feinverteilung der Reaktionsteilnehmer erreicht werden. Auch die geplante Verwendung der nach Abschluss der Quaternierung erhaltenen Gemenge bestimmt mit die Wahl der Lösungsmittel. Sollen sie direkt als Flüssigfarbstoffe zum Färben eingesetzt werden, wählt man Lösungsmittel, die in Flüssigeinstellungen geläufig sind, z.B. Wasser, Glykole, Glykolester, Glykolether oder Hydroxypropionitril.

Zur Wiedergewinnung der nicht wässrigen Lösungsmittel kann man z.B. so verfahren, dass man dieselben vor der Quaternierung abdestilliert oder mit Wasserdampf abtreibt.

Beispiel 1

Man verrührt 495 g N-Methyl-N-benzyl-anilin mit 150 ml Dimethylformamid, 150 ml Isopropanol, 150 g Eisessig und 210 g 3-Amino-1,2,4-triazol und tropft dann bei -5 bis -1°C eine Lösung von 175 g $NaNO_2$ in 220 ml Wasser ein. Anschliessend werden bei der gleichen Temperatur innerhalb von 45 min noch 150 g Eisessig eingetropft. Dann lässt man die Temperatur der Mischung langsam auf 15°C ansteigen, rührt noch 2-3 h nach und dosiert bei der gleichen Temperatur 1000 ml Wasser ein. Man rührt bei Raumtemperatur bis zum nächsten Arbeitstag und stellt dann den pH-Wert, der bei 5 liegt, mit etwas konz. Natronlauge auf 7 ein, gibt 42,6 g MgO zu und tropft binnen 45-60 min bei 10-14°C 584 g Dimethylsulfat zu. Dann rührt man 1 h nach, lässt dabei die Temperatur auf ca. 15°C ansteigen und tropft dann nochmals 219 g Dimethylsulfat ein. Sobald der pH-Wert auf 7 sinkt, gibt man nochmals 17,5 g MgO zu. Die Temperatur soll jetzt auf 20°C ansteigen. Falls nach 2 h im Dünnschichtchromatogramm noch unquaternierter Farbstoff nachweisbar ist, gibt man noch 50 g Dimethylsulfat zu und rührt bei Raumtemperatur über Nacht. Am nächsten Morgen liegt der pH-Wert bei 7. Man stellt ihn mit wenig Salzsäure auf 5, rührt 150 g NaCl, 500 ml gesättigte NaCl-Lösung und 50 g $ZnCl_2$ ein und setzt den Rührer still. Das Wasser setzt sich unten ab; es wird abgelassen und dann das Farbstofföl mit 2000 ml Wasser ausgerührt und auf 95°C erhitzt. Die erhaltene Lösung kann, falls gewünscht, mit Aktivkohle geklärt werden. Dann rührt man bei 95°C 130 g $ZnCl_2$ und 375 g Kochsalz ein, setzt den Rührer still und lässt das heisse Öl auf ein Trockenblech laufen. Das Farbharz erstarrt im Vakuum bei 65°C zu einem spröden Produkt, welches sich gut mahlen lässt. Man erhält 855 g Farbstoffpulver der Formel

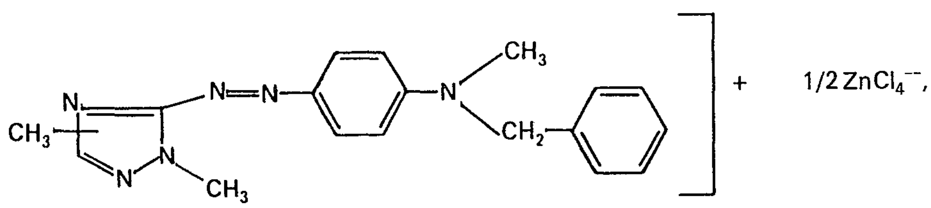

welches PAC in einem etwas klareren Rot als ein vergleichbarer Handelsfarbstoff färbt.

Beispiel 2

Man verrührt 1 l Wasser, 210 g Aminotriazol und 175 g $NaNO_2$ und tropft dann bei -5 bis -1°C eine Mischung von 372,5 g Diethylanilin und 245 g Eisessig ein. Dann rührt man 3 h bei dieser Temperatur nach, lässt die Temperatur des Gemisches auf Raumtemperatur ansteigen und rührt bis zum nächsten Arbeitstag. Anschliessend wird der pH-Wert, der bei 5,1 liegt, mit wenig konz. Natronlauge auf 7 eingestellt und die Suspension auf 10°C abgekühlt. Bei 10-14°C rührt man nun 46,2 g MgO ein und lässt in ca. 30-60 min 584 g Dimethylsulfat zutropfen, rührt 1 h nach, wobei die Temperatur auf 15°C ansteigen soll, und tropft dann noch 219 g Dimethylsulfat ein. Sobald der pH-Wert auf 7 fällt, rührt man nochmals 17,5 g MgO ein. Die Temperatur soll jetzt auf 19-20°C steigen. Nach etwa 1-2 h weiteren Nachrührens ist im Dünnschichtchromatogramm kein unquaternierter Farbstoff mehr nachzuweisen. Man stellt den pH-Wert mit wenig HCl auf 4 und lässt über Nacht rühren. Somit erhält man 3365 g einer rückstandfreien Farbstofflösung, die man gewünschtenfalls mit Aktivkohle klären kann. Sie ist lagerstabil und als Färbepräparat direkt zum Färben sauer modifizierter Textilien geeignet. Sie enthält den Farbstoff der Formel

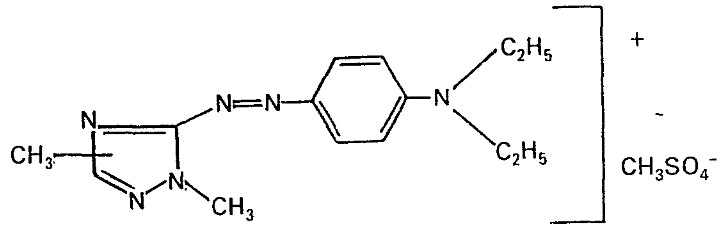

Beispiel 3

Man arbeitet wie in Beispiel 2, verrührt die erhaltene Lösung mit 500 ml Wasser, 165 g $ZnCl_2$ und 570 g $NH_4Cl$ und rührt nach, bis der ausgefallene Farbstoff kristallisiert. Nach Trocknen im Vakuum bei 45°C erhält man 1148 g Farbstoff, der

Dralon in einem etwas klareren Rot als ein vergleichbarer Handelsfarbstoff färbt.

Beispiel 4

Man verrührt 530 g N-Ethyl-N-benzyl-anilin mit 250 ml Dimethylformamid, 250 ml Isopropanol, 150 g Eisessig und 210 g 3-Amino-1,2,4-triazol und tropft dann bei -5 bis -1°C eine Lösung von 175 g $NaNO_2$ in 220 ml Wasser ein. Anschliessend werden bei der gleichen Temperatur innerhalb von 45 min noch 150 g Eisessig eingetropft. Dann lässt man die Temperatur der Mischung langsam auf 15°C ansteigen, rührt bei 15°C noch 2-3 h nach und dosiert bei der gleichen Temperatur 1000 ml Wasser und anschliessend 200 ml Dimethylformamid ein. Der pH-Wert liegt bei 5. Es wird nun wie im Beispiel 1 beschrieben weitergearbeitet und quaterniert. Nach Abschluss der Reaktion rührt man in den Ansatz 160 g NaCl, 1000 ml gesättigte NaCl-Lösung und 100 g $ZnCl_2$ ein. Das zähe Farbharz setzt sich sofort unten ab. Man hebert das Wasser ab und löst den Farbstoff in 2500 ml Wasser bei 95°C. Die Lösung kann gewünschtenfalls mit Aktivkohle geklärt werden. Man verrührt die heisse Lösung mit 80 g $ZnCl_2$ und 375 g Kochsalz, setzt den Rührer still und lässt das heisse Öl auf ein Trockenblech laufen. Es erstarrt im Vakuum bei 65°C zu einem spröden Produkt, welches gut mahlbar ist. Man erhält 815 g Farbstoffpulver der Formel

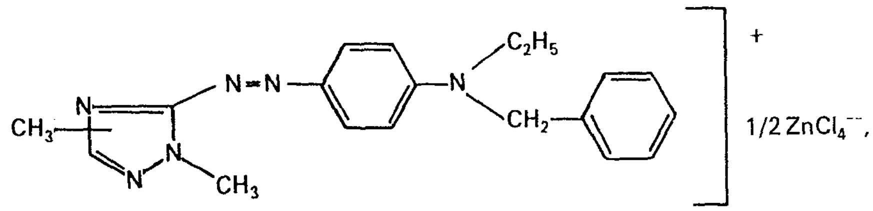

welches PAC in einem klaren Rot färbt.

Beispiel 5

Man arbeitet wie in Beispiel 4, setzt jedoch statt N-Ethyl-N-benzylanilin 672,5 g N-Ethyl-N-benzoyloxyethyl-anilin mit einem Reingehalt von 97,8% ein. Nach der Kupplung dosiert man auch hier 1000 ml Wasser ein, jedoch kein Dimethylformamid mehr. Der pH-Wert liegt bei 5,2. Quaterniert wird analog Beispiel 1. Nach Abschluss der Reaktionen rührt man 160 g NaCl und 500 ml gesättigte Kochsalzlösung ein, setzt den Rührer still und lässt das Wasser unten ab. Das Farbstofföl löst man bei 95°C in 2000 ml Wasser. Diese Lösung kann, falls gewünscht, mit Aktivkohle geklärt werden. Man verrührt sie bei 95°C mit 165 g $ZnCl_2$ und 375 g NaCl, setzt den Rührer still und lässt das sich sofort unten abscheidende Öl auf ein Trockenblech ab. Nach Trocknen im Vakuum bei 65°C erhält man 993 g des gut mahlbaren spröden Produktes der Formel

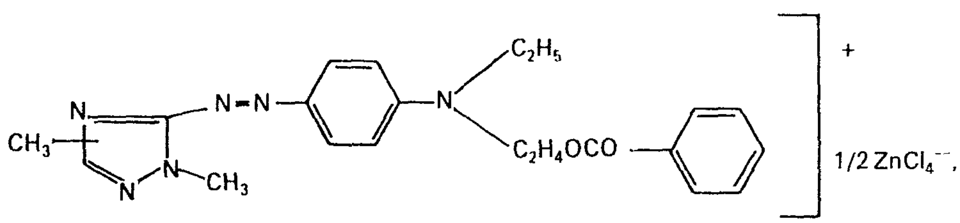

welches PAC in einem klaren Rot färbt.

Ein gleich gutes Ergebnis wird erhalten, wenn man statt der ersten 150 g Eisessig 122,5 g 25%ige Schwefelsäure einsetzt.

Beispiel 6

Man arbeitet wie in Beispiel 1. Nach Abschluss der Alkylierung rührt man 50 ml gesättigte Natriumsulfatlösung ein, setzt den Rührer still und trennt das Wasser vom Farbstofföl ab. Der pH-Wert des Öls wird mit Essigsäure auf 5 gestellt. Man erhält so 1280 g eines wasserarmen Farbstofföls, das man durch Vermischen mit einem Lösungsmittel (z.B. Ethylenglykol, Propylenglykol oder Hydroxypropionitril), welches gegebenenfalls mit Wasser verdünnt werden kann, auf die Stärke eines handelsüblichen Flüssigfarbstoffes bringt. Diese Flüssigeinstellung ist lagerstabil und direkt zum Färben von Polyacrylnitril in einem klaren Rot geeignet. Sie enthält den Farbstoff der Formel

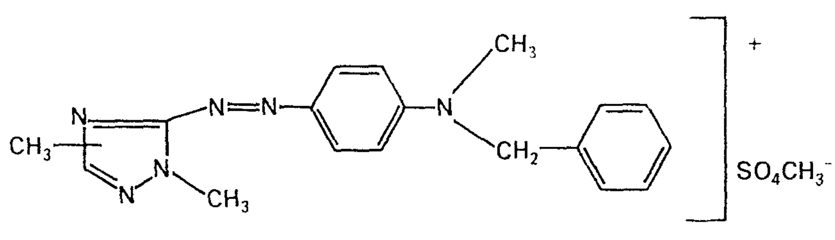

Falls gewünscht, kann man das Öl vor dem Einstellen auf die gewünschte Farbstärke klären, indem man es mit 2 l siedendem Wasser aufrührt, Aktivkohle zusetzt und filtriert. Zum Filtrat rührt man 250 g $Na_2SO_4$, setzt den Rührer still und trennt nach dem Abkühlen das unten abgesetzte Öl erneut ab. Anschliessend wird es mit Lösungsmittel, z.B. mit 50%iger wässriger Propylenglykollösung, auf die gewünschte Farbstärke verdünnt. Eine Einstellung mit 1000 g Ethylenglykol und 300 g Wasser war gut lagerstabil.

Beispiel 7

Man verrührt 240 ml 3-Hydroxypropionitril, 84 g 3-Amino-1,2,4-triazol, 70 g $NaNO_2$ und 80 ml Wasser, tropft bei -5 bis -1°C eine Lösung von 70 g Eisessig in 198 g N-Methyl-N-benzyl-anilin und anschliessend innerhalb von 2 h bei -5°C bis 0°C 50 g Eisessig ein. Dann werden bei 0°C noch 200 ml Wasser eingetropft. Man rührt 5 h bei 0°C nach, lässt die Temperatur auf Raumtemperatur ansteigen und rührt bis zum nächsten Arbeitstag. Der pH-Wert liegt bei 5,2. Dann kühlt man auf 10°C ab, dosiert 233,5 g Dimethylsulfat ein und tropft bei 10°C 45%ige Natronlauge ein, bis der pH-Wert bei 7 liegt. Anschliessend gibt man 18,5 g MgO zu und lässt die Temperatur binnen 1 h auf 15°C steigen. Dann werden nochmals 88 g Dimethylsulfat eingetropft. Sobald der pH-Wert auf 7 fällt, werden noch 7 g MgO nachgesetzt. Innerhalb der nächsten Stunde steigt die Temperatur auf 20°C an. Wenn nach weiteren 2 h im Dünnschichtchromatogramm noch unquaternierter Farbstoff nachweisbar ist, gibt man noch 50 g Dimethylsulfat und 1 g MgO zu und rührt dann bei Raumtemperatur über Nacht nach. Man erhält eine homogene Lösung, die gewünschtenfalls mit Aktivkohle geklärt werden kann. Ihr pH-Wert liegt bei 6,6. Man stellt ihn mit wenig Essigsäure auf 5 und erhält so 1415 g einer direkt zum Färben auf PAC geeigneten Flüssigeinstellung, die man z.B. mit Propylenglykol auf eine handelsübliche Stammstärke verdünnen kann. Sie enthält den Farbstoff der Formel

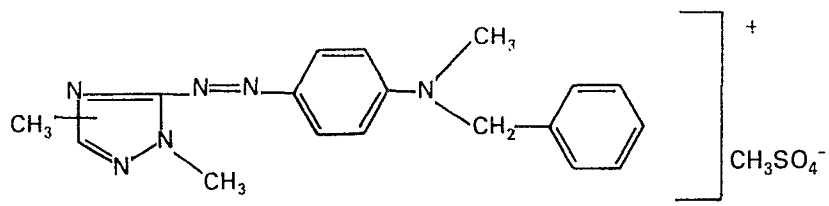

Beispiel 8

Man arbeitet wie in Beispiel 2 und setzt statt 372,5 g Diethylanilin 303 g Dimethylanilin ein. Man erhält so 3300 g einer lagerstabilen Lösung, die direkt zum Färben von Polyacrylnitril in einem roten Farbton geeignet ist. Sie enthält den Farbstoff der Formel

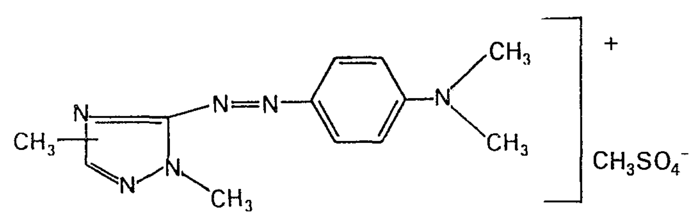

Beispiel 9

Man arbeitet wie in Beispiel 2 und setzt statt 1000 ml Wasser eine Lösung von 250 ml Butylenglykol in 250 ml Wasser ein. Nach Abschluss der Reaktionen rührt man noch 500 ml Wasser ein und erhält so 3350 g einer lagerstabilen Farbstofflösung, die direkt zum Färben von Polyacrylnitril geeignet ist.

Beispiel 10

Man verrührt 400 ml Wasser, 84 g 3-Amino-1,2,4-triazol und 70 g $NaNO_2$ und tropft dann bei -5°C eine Lösung von 179 g Di-n-propylanilin in 98 g Eisessig ein. Es wird noch 3 h bei -5°C und dann ohne Kühlung bis zum nächsten Morgen nachgerührt. Der pH-Wert der Suspension liegt bei 5. Man stellt ihn mit etwas konz. Natronlauge auf 7, kühlt auf 10°C ab, gibt 18,5 g MgO zu und tropft in 30 min 233,5 g Dimethylsulfat ein. Die Temperatur soll innerhalb einer Stunde auf 15°C ansteigen. Dann werden noch 88 g Dimethylsulfat und sobald der pH-Wert auf 7 abfällt nochmals 7 g MgO zugesetzt. In der nächsten Stunde steigt die Temperatur auf 19°C an. Wenn nach 2 weiteren Stunden im Dünnschichtchromatogramm noch unquaternierter Farbstoff nachgewiesen wird, tropft man nochmals 50 g Dimethylsulfat ein und rührt dann bei Raumtemperatur bis zum nächsten Morgen. Der pH-Wert liegt dann bei 6. Man stellt ihn mit wenig HCl auf 5. Die erhaltene Lösung kann, falls gewünscht, mit Aktivkohle geklärt werden.

Der Farbstoff wird mit Siedesalz und Zinkchlorid ausgefällt, abgenutscht und getrocknet. Man erhält 379,3 g Farbstoff der Formel

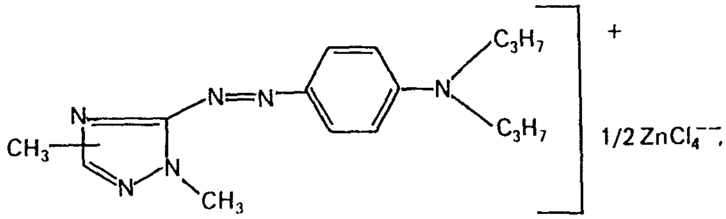

der PAC in einem klaren Rot färbt.

Beispiel 11

Man verrührt 250 ml Dimethylformamid, 250 ml Isopropanol, 150 g Eisessig, 210 g Aminotriazol und 672,5 g N-Ethyl-N,β-benzoyloxyethyl-anilin und tropft bei -5 bis -1°C binnen 30 min eine Lösung von 175 g $NaNO_2$ in 220 ml Wasser ein. Anschliessend werden bei der gleichen Temperatur binnen 45 min noch 150 g Eisessig eingetropft. Dann lässt man die Temperatur der Mischung langsam auf 15°C ansteigen, rührt bei 15°C noch 3 h nach und dosiert bei der gleichen Temperatur 1000 ml Wasser ein. Man rührt bei Raumtemperatur bis zum nächsten Arbeitstag und stellt dann den pH-Wert, der bei 5,2 liegt, mit etwas konz. Natronlauge auf 7, gibt 46,2 g MgO zu und tropft innerhalb von 45 min bei 10-14°C 584 g Dimethylsulfat zu. Dann rührt man 1 h nach, lässt dabei die Temperatur auf 15°C ansteigen und tropft dann nochmals 219 g Dimethylsulfat ein. Sobald der pH-Wert auf 7 sinkt, gibt man nochmals 17,5 g MgO zu. Die Temperatur soll jetzt innerhalb von 1 h auf 20°C steigen. Falls nach 3 h im Dünnschichtchromatogramm noch unquaternierter Farbstoff nachgewiesen wird, gibt man noch 50 g Dimethylsulfat und 1 g MgO zu und rührt dann bei Raumtemperatur über Nacht. Am nächsten Morgen liegt der pH-Wert bei 7. Man stellt ihn mit wenig Schwefelsäure auf 5 und rührt 500 ml gesättigte Natriumsulfatlösung ein. Dann setzt man den Rührer still und trennt das sich unten abscheidende Wasser ab. Man erhält so 1590 g eines wasserarmen Farbstofföls, das man durch Vermischen mit einem Lösungsmittel (z.B. mit Methylglykolacetat oder Ethylenglykol), welches gegebenenfalls mit Wasser verdünnt werden kann, auf die Stärke einer handelsüblichen Farbstofflösung einstellt.

Die Einstellung mit 930 g Ethylenglykol ist lagerstabil und direkt zum Färben von sauer modifizierten Synthesefasern in roten Tönen geeignet. Sie enthält den Farbstoff der Formel

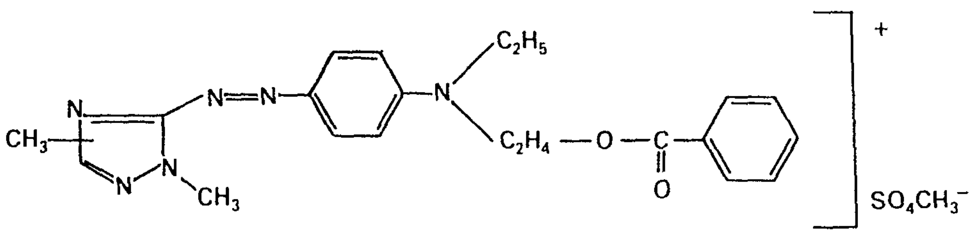

Falls gewünscht, kann das Farbstofföl geklärt werden, z.B. nach der in Beispiel 6 angegebenen Arbeitsvorschrift.

Beispiel 12

Man arbeitet wie in Beispiel 7, setzt jedoch statt 198 g N-Methyl-N-benzyl-anilin 212 g Di-n-butylanilin ein. Die nach Abschluss der Quaternierung erhaltene Lösung wird mit 200 ml gesättigter Siedesalzlösung verrührt und dann das sich unten abscheidende Wasser abgetrennt. Das so isolierte Farbstofföl wird in 800 ml Wasser von 70°C verrührt, mit Aktivkohle geklärt und mit 160 g Siedesalz verrührt. Nachdem der Farbstoff vollständig auskristallisiert ist, saugt man ab und trocknet im Vakuum bei 50°C. Man erhält 390 g Farbstoff der Formel

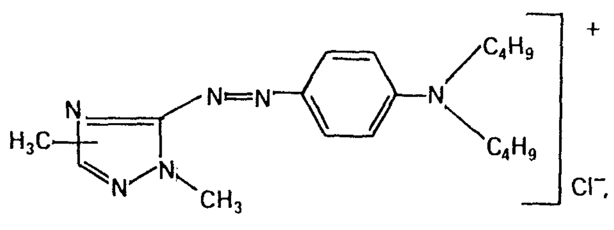

der Polyacrylnitril in einem stark blaustichigen Rot färbt.

Beispiel 13

Arbeitet man wie in Beispiel 2, ersetzt jedoch das Dimethylsulfat durch die äquimolare Menge Diethylsulfat und erhöht die Reaktionstemperatur während der Alkylierung und Quaternierung um 5°C, erhält man den roten Farbstoff der Formel

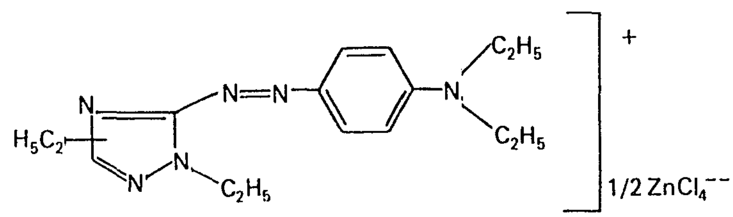

Er färbt Dralon in einem roten Farbton.

Beispiel 14

Ein gleich gutes Ergebnis wie in Beispiel 3 erhält man, wenn man statt MgO 500 g $NaHCO_3$ einrührt und die Reaktionstemperatur gegen Ende auf 30°C steigert.

Beispiel 15

Man arbeitet wie in Beispiel 10, setzt jedoch statt 179 g Di-n-propyl-anilin 160 g N-Methyl-N,β-cyanethyl-anilin ein und fällt nach Abschluss der Reaktionen den Farbstoff mit Siedesalz ohne Zusatz von $ZnCL_2$ aus. Man erhält 368,5 g Farbstoff der Formel

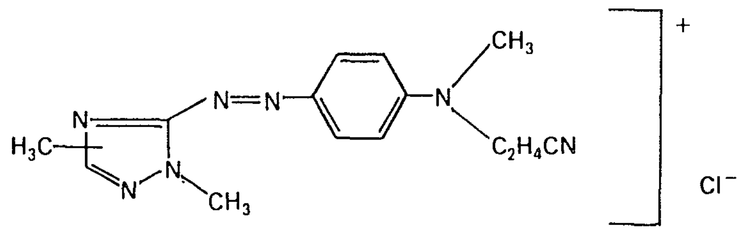

Er färbt PAC in einem roten Farbton.

Beispiel 16

Man arbeitet wie in Beispiel 3, setzt jedoch statt 372,5 g Diethylanilin 388 g N,N-Dimethyl-3-chlor-anilin ein. Man erhält den roten Farbstoff der Formel

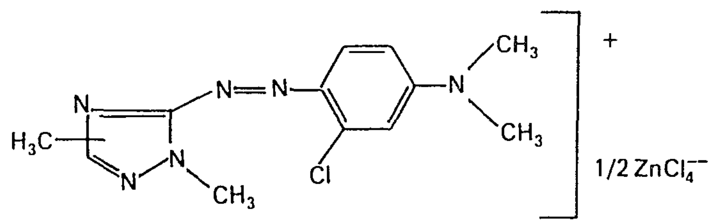

Beispiel 17

Polyacrylnitrilfasern werden bei 40°C im Flottenverhältnis 1:40 in ein wässriges Bad eingebracht, das pro Liter 0,75 g 30%ige Essigsäure, 0,38 g Natriumacetat und 0,3 g der in Beispiel 6 beschriebenen Farbstoffglykollösung enthält. Man erhitzt innerhalb von 20–30 min zum Sieden und hält das Bad 30–60 min bei dieser Temperatur. Nach dem Spülen und Trocknen erhält man eine klare rote Färbung mit sehr guten Echtheitseigenschaften.

Beispiel 18

Polyacrylnitrilfasern werden bei 40°C im Flottenverhältnis 1:40 in ein wässriges Bad eingebracht, das pro Liter 0,75 g 30%ige Essigsäure, 0,38 g Natriumacetat und 0,45 g der in Beispiel 2 beschriebenen Farbstofflösung enthält. Man erhitzt innerhalb von 20–30 min zum Sieden und hält das Bad 30–60 min bei dieser Temperatur. Nach dem Spülen und Trocknen erhält man eine rote Färbung mit sehr guten Echtheitseigenschaften.

Beispiel 19

Sauer modifizierte Polyglykolterephthalatfasern werden bei 20°C im Flottenverhältnis 1:40 in ein wässriges Bad eingebracht, das pro Liter 3–10 g Natriumsulfat, 0,1–1 g Oleylalkoholpolyglykolether (aus 1 mol Oleylalkohol + 50 mol Ethylenoxid), 0–15 g Dimethylbenzyldodecylammoniumchlorid und 0,15 g des in Beispiel 5 beschriebenen Farbstoffpulvers enthält und mit Essigsäure auf pH 4–5 eingestellt wurde. Man erhitzt innerhalb von 30 min auf 100°C und hält das Bad 60 min bei dieser Temperatur. Anschliessend werden die Fasern gespült und getrocknet. Man erhält eine rote Färbung mit sehr guten Echtheitseigenschaften.

Beispiel 20

Arbeitet man analog Beispiel 3, setzt jedoch statt 3-Amino-1,2,4-triazol 3-Amino-5-methyl-1,2,4-triazol ein, erhält man den Farbstoff der Formel

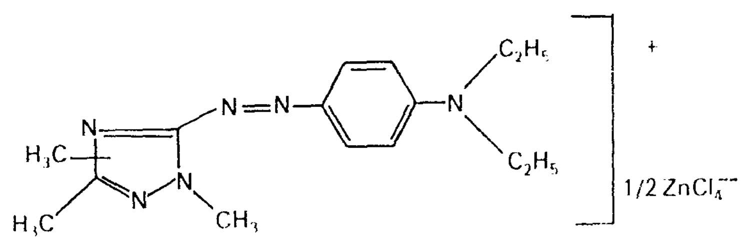

Er färbt PAC in rotem Farbton.

Beispiel 21
Man arbeitet wie in Beispiel 1, setzt jedoch als Lösungsmittel statt 150 ml Dimethylformamid und 150 ml Isopropanol eine Lösung von 25 g eines aromatischen Polyglykolethers in 2 l Wasser ein und verzichtet auf die nachträgliche Zugabe der 1000 ml Wasser. Man erhält in guter Ausbeute den in Beispiel 1 beschriebenen Farbstoff.

Beispiel 22
Man arbeitet wie in Beispiel 1, ersetzt jedoch die dort eingesetzten Lösungsmittel (150 ml Dimethylformamid und 150 ml Isopropanol) durch 1000 ml Methanol. Nach dem Nachrühren bei 15°C und nach der Zugabe der 1000 ml Wasser erwärmt man die Mischung langsam auf 40°C, rührt 3 h bei dieser Temperatur nach und erhitzt dann weiter bis auf 60–65°C. Dann leitet man so lange Dampf ein, bis kein Methanol mehr abdestilliert, kühlt auf 10°C ab, stellt währenddessen den pH-Wert auf 7 und arbeitet weiter wie in Beispiel 1. Man erhält das gleiche gute Ergebnis wie in Beispiel 1.

Beispiel 23
Verfährt man wie in Beispiel 22, ersetzt jedoch die 495 g N-Methyl-N-benzyl-anilin durch 362 g 1,2-Dimethyl-indol, so erhält man bei Zugabe von $ZnCl_2$ kein Farbstofföl, sondern den festen Farbstoff der Formel

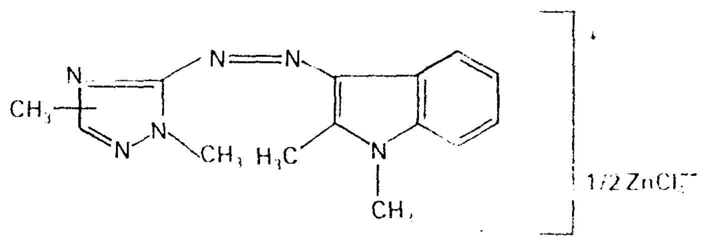

der Polyacrylnitril in einem rotstichigen Gelb mit sehr guten Echtheiten färbt.

**Patentansprüche**

1. Verfahren zur Herstellung von kationischen Farbstoffen der allgemeinen Formel

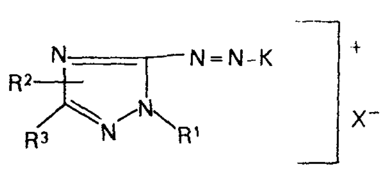 1,

worin
$R^1$ und $R^2$ gegebenenfalls substituiertes Alkyl, Alkenyl oder Aralkyl,
$R^3$ Wasserstoff, gegebenenfalls substituiertes Alkyl, Aralkyl, Cycloalkyl oder Aryl,
K den Rest einer Kupplungskomponente KH und
$X^-$ ein Anion bedeuten,
dadurch gekennzeichnet, dass man die durch Reaktion von Aminotriazolen der Formel

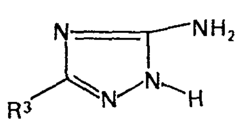 2,

worin
$R^3$ die oben angegebene Bedeutung hat, salpetrige Säure bildende Substanzen und Kupplungskomponenten HK bei einem durch Zugabe einer Säure eingestellten pH-Wert von $4 < pH < 6$ erhaltenen Suspensionen bzw. Lösungen von Farbstoffen der allgemeinen Formel

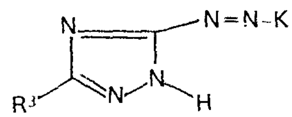 3

worin
$R^3$ und K die oben angegebene Bedeutung besitzen, ohne Isolierung der Farbstoffe mit Alkylierungsmitteln bzw. Aralkylierungsmitteln, die die Reste $R^1$, $R^2$ und $X^-$ abzugeben bzw. zu bilden vermögen, und – falls sie das Anion $X^-$ nicht bilden – in Gegenwart einer das Anion $X^-$ liefernden Säure umsetzt und die Farbstoffe gegebenenfalls isoliert.

2. Verfahren nach Anspruch 1, dadurch gekennzeichnet, dass als Säure Salzsäure, Schwefelsäure, Ameisensäure, Propionsäure und insbesondere Essigsäure oder deren Gemische eingesetzt werden.

3. Verfahren nach Ansprüchen 1 und 2, dadurch gekennzeichnet, dass man als Lösungsmittel Wasser oder ein mit Wasser mischbares organisches Lösungsmittel oder deren Gemische einsetzt.

4. Verfahren nach Ansprüchen 1 und 2, dadurch gekennzeichnet, dass man als Lösungsmittel ein in Wasser unlösliches organisches Lösungsmittel oder dessen Suspension in Wasser einsetzt.

5. Verfahren nach Ansprüchen 1 bis 4, dadurch gekennzeichnet, dass als Kupplungskomponente KH ein Indol der Formel

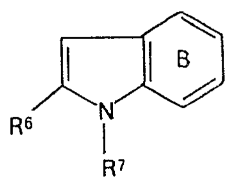

eingesetzt wird, worin
$R^6$ für Methyl, Ethyl oder Phenyl,
$R^7$ für H, Benzyl oder Alkyl, welches gegebenenfalls durch $R^8$ substituiert sein kann und
$R^8$ für Halogen, Hydroxy-, $C_1$- bis $C_4$-Alkoxy, Cyan, Acetoxy, Di-($C_1$- bis $C_3$-alkyl)-amino, $C_1$- bis $C_2$-Alkoxycarbonyloxy, $C_1$- bis $C_4$-Alkoxycarbonyl, Aminocarbonyl, Mono- und Di-($C_1$- bis $C_2$-alkyl)-aminocarbonyl, Cyclohexyl, Cyclohexyloxy, Phenyl, Naphthyl, Phenoxy, Naphthoxy, Benzoyloxy, Phenoxyalkyloxy, Phenoxycarbonyloxy, Phenylaminocarbonyloxy, Benzoyl oder Thiophenyl stehen und
der Ring B beispielsweise durch $C_1$- bis $C_4$-Alkyl, Halogen, $C_1$- bis $C_3$-Alkoxy, Acetylamino, Trifluormethyl, $C_1$- bis $C_2$-Alkylsulfonyl oder Cyan substituiert sein kann.

6. Verfahren nach Ansprüchen 1–4, dadurch gekennzeichnet, dass als Kupplungskomponente KH eine Verbindung der Formel

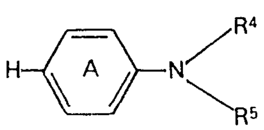

eingesetzt wird, worin
$R^4$ für Wasserstoff, eine gesättigte oder ungesättigte $C_1$- bis $C_8$-Alkylgruppe, die durch $R^8$ substituiert sein kann,
$R^5$ für Phenyl oder eine gesättigte oder ungesättigte $C_1$- bis $C_8$-Alkylgruppe, die durch $R^8$ substituiert sein kann,
$R^8$ für Halogen, Hydroxy, $C_1$- bis $C_4$-Alkoxy, Cyan, Acetoxy, Di-($C_1$- bis $C_3$-alkyl)-amino, $C_1$- bis $C_2$-Alkoxycarbonyloxy, $C_1$- bis $C_4$-Alkoxycarbonyl, Aminocarbonyl, Mono- und Di-($C_1$- bis $C_2$-alkyl)-aminocarbonyl-, Cyclohexyl, Cyclohexyloxy, Phenyl, Naphthyl, Phenoxy, Naphthoxy, Benzoyloxy, Phenoxyalkyloxy, Phenoxycarbonyloxy, Phenylaminocarbonyloxy, Benzoyl oder Thiophenyl stehen und
die aromatischen Ringe in $R^4$, $R^5$ und $R^8$ ihrerseits Substituenten, wie Chlor, Methyl, Ethyl, Methoxy, Ethoxy, Phenyl oder Cyclohexyl, tragen können,
$R^4$ und $R^5$ zusammen mit dem N-Atom einen Ring, beispielsweise zum Pyrrolidin, Piperidin, Piperazin oder Morpholin, schliessen können,
$R^4$ und $R^5$ zum Ring A ringgeschlossen sein können, so dass z.B. ein gegebenenfalls durch Methyl, Ethyl, Chlor oder Methoxy substituiertes Indolin, Tetrahydrochinolin-, Benzomorpholin- oder Carbazolringsystem entsteht und
der Ring A beispielsweise durch $C_1$- bis $C_4$-Alkyl, Halogen, $C_1$- bis $C_3$-Alkoxy, Acetylamino, Trifluormethyl, $C_1$- bis $C_2$-Alkylsulfonyl oder Cyan substituiert sein kann, zwei benachbarte Substituenten des Ringes A miteinander ringgeschlossen sein können, so dass zusammen mit dem Ring A ein Tetrahydronaphthalin-, ein Naphthalin- oder ein heterocyclisches Ringsystem entsteht.

7. Verwendung der nach Ansprüchen 1–6 erhaltenen Farbstoffe zum Färben von sauer modifizierten Synthesefasern.

8. Verwendung nach Anspruch 7, dadurch gekennzeichnet, dass man die nach Ansprüchen 1–6 erhaltenen Farbstoff-Lösungen oder -Suspensionen einsetzt.

9. Verwendung nach Anspruch 7, dadurch gekennzeichnet, dass man Farbstoffe einsetzt, die erhalten werden durch Abtrennung der nichtwässrigen Phase der nach Ansprüchen 1–6 erhaltenen Farbstoffsuspensionen, deren Behandlung mit wässrigen Salzlösungen und anschliessende Isolierung.

## Claims

1. Process for the preparation of cationic dyestuffs of the general formula

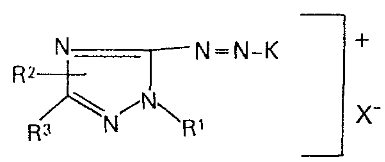

1.

wherein
$R^1$ and $R^2$ denote optionally substituted alkyl, alkenyl or aralkyl,
$R^3$ denotes hydrogen or optionally substituted alkyl, aralkyl, cycloalkyl or aryl,
K denotes the radical of a coupling component KH and
$X^-$ denotes an anion,
characterised in that the suspensions or solutions, obtained by reacting aminotriazoles of the formula

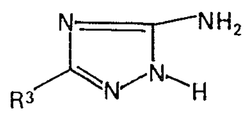

2,

wherein
$R^3$ has the above mentioned meaning,
substances which form nitrous acid and coupling components HK at a pH value of $4 < pH < 6$ established by the addition of an acid, of dyestuffs of the general formula

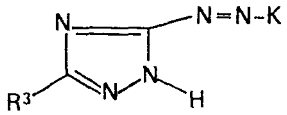

3,

wherein
$R^3$ and K have the abovementioned meaning, are reacted, without isolating the dyestuffs, with alkylating agents or aralkylating agents which are capable of donating or forming the radicals $R^1$, $R^2$ and $X^-$, the reaction being carried out – if these agents do not form the anion $X^-$ – in the presence of an acid which is a source of the anion $X^-$, and, if appropriate, the dyestuffs are isolated.

2. Process according to Claim 1, characterised in that hydrochloric acid, sulphuric acid, formic acid, propionic acid or, in particular, acetic acid, or a mixture thereof, is employed as the acid.

3. Process according to Claims 1 and 2, characterised in that water or a water-miscible organic solvent, or a mixture thereof, is employed as the solvent.

4. Process according to Claims 1 and 2, characterised in that an organic solvent which is insoluble in water or a suspension thereof in water is employed as the solvent.

5. Process according to Claims 1 to 4, characterised in that an indole of the formula

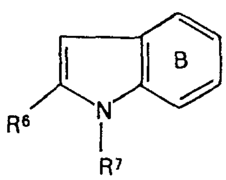

wherein
$R^6$ represents methyl, ethyl or phenyl,
$R^7$ represents H, benzyl or alkyl, which can optionally be substituted by $R^8$,
$R^8$ represents halogen, hydroxyl, $C_1$- to $C_4$-alkoxy, cyano, acetoxy, di-($C_1$- to $C_3$-alkyl)-amino, $C_1$- to $C_2$-alkoxycarbonyloxy, $C_1$- to $C_4$-alkoxycarbonyl, aminocarbonyl, mono- or di-($C_1$- to $C_2$-alkyl)-aminocarbonyl, cyclohexyl, cyclohexyloxy, phenyl, naphthyl, phenoxy, naphthoxy, benzoyloxy, phenoxyalkyloxy, phenoxycarbonyloxy, phenylaminocarbonyloxy, benzoyl or thiophenyl and
the ring B can be substituted, for example by $C_1$- to $C_4$-alkyl, halogen, $C_1$- to $C_3$-alkoxy, acetylamino, trifluoromethyl, $C_1$- to $C_2$-alkylsulphonyl or cyano,
is used as the coupling component KH.

6. Process according to Claims 1-4, characterised in that a compound of the formula

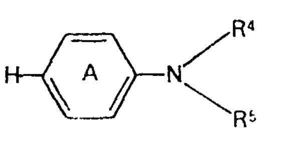

wherein
$R^4$ represents hydrogen or a saturated or unsaturated $C_1$- to $C_8$-alkyl group, which can be substituted by $R^8$,
$R^5$ represents phenyl or a saturated or unsaturated $C_1$- to $C_8$-alkyl group, which can be substituted by $R^8$,
$R^8$ represents halogen, hydroxyl, $C_1$- to $C_4$-alkoxy, cyano, acetoxy, di-($C_1$- to $C_3$-alkyl)-amino, $C_1$- to $C_2$-alkoxycarbonyloxy, $C_1$- to $C_4$-alkoxycarbonyl, aminocarbonyl, mono- or di-($C_1$- to $C_2$-alkyl)-aminocarbonyl, cyclohexyl, cyclohexyloxy, phenyl, naphthyl, phenoxy, naphthoxy, benzoyloxy, phenoxyalkyloxy, phenoxycarbonyloxy, phenylaminocarbonyloxy, benzoyl or thiophenyl and
the aromatic rings in $R^4$, $R^5$ and $R^8$ can in turn carry substituents, such as chlorine, methyl, ethyl, methoxy, ethoxy, phenyl or cyclohexyl, or $R^4$ and $R^5$, together with the N atom, can be joined together to form a ring, for example a pyrrolidine, piperidine, piperazine or morpholine ring, or
$R^4$ and $R^5$ can be cyclised to the ring A, so that, for example, an indoline, tetrahydroquinoline, benzomorpholine or carbazole ring system which is optionally substituted by methyl, ethyl, chlorine or methoxy is formed, and the ring A can be substituted, for example by $C_1$- to $C_4$-alkyl, halogen, $C_1$- to $C_3$-alkoxy, acetylamino, trifluoromethyl, $C_1$- to $C_2$-alkylsulphonyl or cyano, and two adjacent substituents of the ring A can be cyclised with one another, so that, together with the ring A, a tetrahydronaphthalene, naphthalene or heterocyclic ring system is formed, is employed as the coupling component KH.

7. Use of the dyestuffs obtained according to Claims 1-6 for dyeing acid-modified synthetic fibres.

8. Use according to Claim 7, characterised in that the dyestuff solutions or suspensions obtained according to Claims 1-6 are employed.

9. Use according to Claim 7, characterised in that dyestuffs which are obtained by separating off the non-aqueous phase of the dyestuff suspensions obtained according to Claims 1-6, treatment of this phase with aqueous salt solutions and subsequent isolation of the dyestuffs are employed.

**Revendications**

1. Procédé de fabrication de colorants cationiques de formule générale

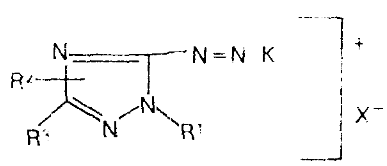

1

dans laquelle
$R^1$ et $R^2$ représentent un alcoyle, alcényle ou aralcoyle éventuellement substitué,
$R^3$ de l'hydrogène, un alcoyle, aralcoyle, cycloalcoyle ou aryle éventuellement substitué
K le radical d'un composant de copulation KH et
$X^-$ un anion,

caractérisé en ce que les suspensions ou solutions de colorants de formule générale

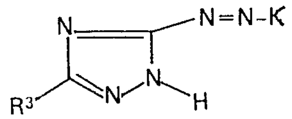

3

dans laquelle
$R^3$ et K possèdent la signification indiquée plus haut,
qui sont obtenues par réaction d'aminotriazols de formule

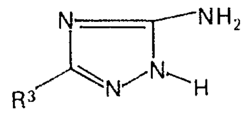

2,

dans laquelle
$R^3$ a la signification indiquée plus haut,
de substances formatrices d'acide nitreux et de composants de copulation HK, et qui ont une valeur de pH réglée avec un acide qui est comprise entre 4 et 6, sont mises à réagir, sans isolation des colorants, avec des agents d'alcoylation ou des agents d'aralcoylation qui fournissent les radicaux $R^1$, $R^2$ et $X^-$ ou sont en mesure de former ceux-ci et – au cas où ils ne forment pas l'anion $X^-$ – en présence d'un acide fournissant l'anion $X^-$, et en ce que les colorants sont éventuellement isolés.

2. Procédé selon la revendication 1, caractérisé en ce qu'on utilise comme acide de l'acide chlorhydrique, de l'acide sulfurique, de l'acide formique, de l'acide propionique et en particulier de l'acide acétique ou leurs mélanges.

3. Procédé selon les revendications 1 et 2, caractérisé en ce qu'on utilise comme solvant de l'eau ou un solvant organique miscible avec l'eau, ou leurs mélanges.

4. Procédé selon les revendications 1 et 2, caractérisé en ce qu'on utilise comme solvant un solvant organique insoluble dans l'eau ou une suspension de celui-ci dans de l'eau.

5. Procédé selon les revendications 1 à 4, caractérisé en ce qu'on utilise comme composant de copulation KH un indol de formule:

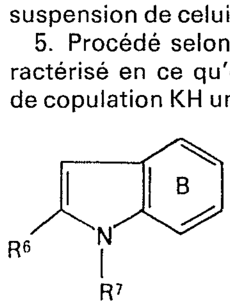

dans laquelle
$R^6$ représente un méthyle, éthyle ou phényle,
$R^7$ H, benzyle ou alcoyle, qui peut être éventuellement substitué par $R^8$,
$R^8$ de l'halogène, hydroxy, alcoxy en $C_1$–$C_4$, cyano, acétoxy, di-(alcoyl en $C_1$–$C_3$)-amino, alcoxycarbonyloxy en $C_1$–$C_2$, alcoxycarbonyle en $C_1$–$C_4$, aminocarbonyle, mono- et di-(alcoyl en $C_1$–$C_2$)-aminocarbonyle, cyclohexyle, cyclohexyloxy, phényle, naphtyle, phénoxy, naphtoxy, benzoyloxy, phénoxyalcoyloxy, phénoxycarbonyloxy, phénylaminocarbonyloxy, benzoyle ou thiophényle et
le noyau B peut être substitué par exemple par un alcoyle en $C_1$–$C_4$, de l'halogène, alcoxy en $C_1$–$C_3$, acétylamino, trifluorométhyle, alcoylsulfonyle en $C_1$–$C_2$ ou cyano.

6. Procédé selon les revendications 1 à 4, caractérisé en ce qu'on utilise comme composant de copulation KH un composé de formule

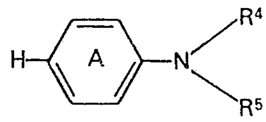

dans laquelle
$R^4$ est de l'hydrogène, un groupe alcoyle en $C_1$–$C_8$ saturé ou insaturé qui peut être substitué par $R^8$,
$R^5$ un phényle ou un groupe alcoyle en $C_1$–$C_8$ qui peut être substitué par $R^8$,
$R^8$ halogène, hydroxy, alcoxy en $C_1$–$C_4$, cyano, acétoxy, di-(alcoyl en $C_1$–$C_3$)-amino, alcoxycarbonyloxy en $C_1$–$C_2$, alcoxycarbonyle en $C_1$–$C_4$, aminocarbonyle, mono- et di-(alcoyl en $C_1$–$C_2$)-aminocarbonyle, cyclohexyle, cyclohexyloxy, phényle, naphtyle, phénoxy, naphtoxy, benzoyloxy, phénoxyalcoyloxy, phénoxycarbonyloxy, phénylaminocarbonyloxy, benzoyle ou thiophényle et
les noyaux aromatiques dans $R^4$, $R^5$ et $R^8$ de leur côté peuvent porter des substituants tels que du chlore, méthyle, éthyle, méthoxy, éthoxy, phényle ou cyclohexyle,
$R^4$ et $R^5$ peuvent se fermer ensemble avec l'atome N et un cycle, par exemple en pyrrolidine, pipéridine, pipérazine ou morpholine,
$R^4$ et $R^5$ peuvent être cyclisés en le noyau A, en sorte d'obtenir par exemple un système nucléaire indoline, tétrahydroquinoléine, benzomorpholine, ou carbazol éventuellement substitué par un méthyle, éthyle, du chlore ou méthoxy,
le noyau A peut être substitué par exemple par un alcoyle en $C_1$–$C_4$, de l'halogène, alcoxy en $C_1$–$C_3$, acétylamino, trifluorométhyle, alcoylsulfonyle en $C_1$–$C_2$ ou cyano, deux substituants voisins du noyau A pouvant entre eux former un cycle en sorte que, conjointement avec le noyau A, on obtienne un système nucléaire tétrahydronaphtalène, naphtalène ou hétérocyclique.

7. Utilisation des colorants obtenus selon les revendications 1 à 6 pour la teinture de fibres synthétiques modifiées à l'acide.

8. Utilisation selon la revendication 7, caractérisée en ce qu'on utilise les solutions ou suspensions des colorants obtenus selon les revendications 1 à 6.

9. Utilisation selon la revendication 7, caractérisée en ce qu'on utilise des colorants qui sont obtenus par séparation de la phase non aqueuse des suspensions de colorants obtenues selon les revendications 1 à 6, par leur traitement avec des solutions aqueuses de sels et par isolation consécutive.